# EUROPÄISCHE PATENTANMELDUNG

(11) **EP 4 786 824 A1**
(43) Veröffentlichungstag der Anmeldung: **05.08.2026**
(21) Anmeldenummer: 25155702.1
(22) Anmeldetag: 04.02.2025
(51) Int. Cl.: F16H 48/08, F16H 55/17

(54) **ZAHNRAD, VORRICHTUNG UND ARBEITSMASCHINE**

(71) Anmelder: Deere & Company, Moline, IL 61265 (US)
(72) Erfinder: STEINER, TOBIAS, 68163 Mannheim (DE); CEBULLA, MARTIN, 68163 Mannheim (DE)
(74) Vertreter: Stein, Stefan

(57) **Zusammenfassung**

Die Erfindung betrifft ein Zahnrad (100) mit einer Zahnradseite (102) und einer der Zahnradseite (102) gegenüberliegenden Rückseite (104). Die Rückseite (104) weist eine Mikrostruktur (116) auf. Die Erfindung betrifft weiter eine Vorrichtung (30) umfassend ein Zahnrad (100) und ein Bauteil (118) sowie eine Arbeitsmaschine (10).

## Beschreibung

Die Erfindung betrifft ein Zahnrad gemäss dem Oberbegriff des unabhängigen Anspruchs 1, eine Vorrichtung gemäss dem Oberbegriff des unabhängigen Anspruchs 7 und eine Arbeitsmaschine gemäss dem Oberbegriff des unabhängigen Anspruchs 15.

Zahnräder dienen zur Übertragung von Drehbewegungen und Drehmomenten (Leistungsübertragung) von einer Antriebswelle auf eine Abtriebswelle, wobei sie beispielsweise als Stirnräder, Kegelräder, Hypoidräder, Kronenräder, Schraubenräder oder Schneckenräder ausgebildet sein können.

Eine Sonderbauart von Kegel- oder Tellerrädern, beispielsweise mit Hypoidverzahnungen, werden im Kraftfahrzeugbau, im Allgemeinen bei Achsgetrieben, eingesetzt. Bei der Leistungsübertragung vom Zahnrad, insbesondere Kegelrad, auf das Differential, insbesondere Differentialgehäuse, wird das Drehmoment am Zahnrad, insbesondere am Kegelrad oder Tellerrad, über eine Schraubenverbindung, insbesondere eine Schraubflanschverbindung, in das Differentialgehäuse eingeleitet. Dabei erfolgt die Kraftübertragung mittels Reibschluss über eine Rückseite des Zahnrads. Die für den Reibschluss erforderliche Vorspannkraft wird durch mehrere über den Umfang verteilte Schrauben aufgebracht.

Das Zahnrad kann eine Beschichtung aufweisen, die einen signifikanten Einfluss auf den Reibwert hat. Dieser wird durch die Beschichtung erheblich reduziert. Soll der Reibverband das gleiche Drehmoment wie mit einem unbeschichteten Kegelrad übertragen, ist dies bisher nur mit einer Erhöhung der Vorspannkraft möglich.

Ausgehend von diesem Stand der Technik ist es eine Aufgabe der vorliegenden Erfindung eine gegenüber dem Stand der Technik verbessertes Zahnrad, Vorrichtung und Arbeitsmaschine vorzuschlagen. Im Speziellen kann es eine Aufgabe der vorliegenden Erfindung sein ein Zahnrad und/oder eine Vorrichtung und/oder eine Arbeitsmaschine vorzuschlagen, die konstruktiv einfacher ausgestaltet sind und/oder einen verbesserten Wirkungsgrad bei der Leistungsübertragung aufweisen, insbesondere ein höheres Drehmoment übertragen, und/oder einen höheren Reibwert aufweisen.

Diese Aufgabe wird durch ein Zahnrad mit den Merkmalen des Anspruchs 1 und eine Vorrichtung mit den Merkmalen des Anspruchs 7 und eine Arbeitsmaschine mit den Merkmalen des Anspruchs 15 gelöst. Die abhängigen Ansprüche beziehen sich auf besonders vorteilhafte Ausführungsformen der Erfindung.

Unter verbunden kann im Folgenden bevorzugt mechanisch verbunden und/oder mechanisch wirkverbunden verstanden werden. Im Speziellen kann unter verbunden zusätzlich oder alternativ antreibbar verbunden, also drehmoment- und/oder drehzahlübertragend verbunden, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar verstanden werden. Im Speziellen kann unter verbindbar zusätzlich oder alternativ antreibbar verbindbar, also drehmoment- und/oder drehzahlübertragend verbindbar, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Erfindungsgemäss wird ein Zahnrad vorgeschlagen. Das Zahnrad umfasst eine Zahnradseite und eine der Zahnradseite gegenüberliegende und/oder abgewandte Rückseite. Die Rückseite des Zahnrads weist eine Mikrostruktur auf. Das Zahnrad kann ausserdem eine umlaufende Umfangsseite aufweisen. Das Zahnrad kann ausserdem eine umlaufende innere Umfangsseite aufweisen. Das Zahnrad kann im Wesentlichen zylinderförmig und/oder ein Zylinder und/oder scheibenförmig sein. Dabei kann die Zahnradseite eine erste Grundfläche und die Rückseite eine zweite Grundfläche des Zylinders sein. Die umlaufende Umfangsseite kann die Mantelfläche des Zahnrads, insbesondere des zylinderförmigen Zahnrads sein. Das Zahnrad kann aber auch im Wesentlichen hohlzylinderförmig sein. Dabei kann die Zahnradseite eine erste Grundfläche mit einer Wanddicke und die Rückseite eine zweite Grundfläche mit der gleichen Wanddicke des Hohlzylinders sein. Die umlaufende Umfangsseite kann die Mantelfläche des Hohlzylinders sein. Die umlaufende innere Umfangsseite kann eine weitere Mantelfläche des Hohlzylinders sein. Die Zahnradseite und die Grundseite können im Wesentlichen parallel sein.

Ausserdem können an der oder auf der Zahnradseite Zähne zur Leistungsübertragung angeordnet sein. Mit den Zähnen oder durch die Zähne kann vom Zahnrad oder auf das Zahnrad die Leistungsübertragung, also insbesondere eine Energie und/oder Kraft und/oder ein Drehmoment und/oder eine Drehzahl, übertragen werden, insbesondere auf mechanischem Weg übertragen werden.

Im Sinne der Erfindung ist unter einer Mikrostruktur eine Vertiefung und/oder einer Erhöhung auf oder in der Rückseite, bevorzugt eine Vertiefung und/oder einer Erhöhung auf oder in einer Oberfläche und/oder Beschichtung der Rückseite des Zahnrads, zu verstehen. Im Speziellen kann eine solche Mikrostruktur als eine Vertiefung und/oder eine Erhöhung im Material, also insbesondere der Oberfläche und/oder Beschichtung der Rückseite ausgebildet sein. Weiter kann die Mikrostruktur durch eine Materialerhöhung und/oder Materialvertiefung ausgebildet sein. Vorzugsweise ist diese Mikrostruktur auf der gesamten Rückseite angeordnet. Weiter vorzugsweise kann sich die Mikrostruktur, wenigstens abschnittsweise oder vorzugsweise vollständig, entlang einer Strukturierungslinie erstrecken. Die Strukturierungslinie kann insbesondere als eine geometrische, einfache Beschreibung der Längserstreckung der Mikrostruktur zu verstehen sein. Vorzugsweise kann die Strukturierungslinie ein gemittelter Verlauf der Mikrostruktur sein. Weiter kann ein Querschnittsprofil der Mikrostruktur insbesondere die Form der Vertiefung und/oder Erhöhung beschreiben. Im Weiteren kann die Strukturierungslinie den Ort und den Verlauf der Mikrostruktur auf der Rückseite des Zahnrads wenigstens näherungsweise beschreiben. Das Zahnrad kann auf der Rückseite eine oder mehrere Mikrostrukturen aufweisen. Die Mikrostruktur kann oder die Mikrostrukturen können auf der Oberfläche der Rückseite verteilt sein oder die gesamte Oberfläche der Rückseite umfassen.

Die Mikrostruktur kann mittels Materialerosion auf die Rückseite aufgebracht werden, beispielsweise kann die Materialerosion mittels eines Laserstrukturierungsverfahrens aufgebracht werden. Ebenso kann die Mikrostruktur auf dem Zahnrad mit einem 3D Druckverfahren hergestellt werden. Dadurch kann ein besonders schnelles und genaues Aufbringen der wenigstens einen Mikrostruktur auf die Rückseite des Zahnrads ermöglicht werden.

Wesentlich für die Erfindung ist, dass die Rückseite des Zahnrads die Mikrostruktur aufweist. Vorteilhafterweise weist ein derartiges Zahnrad gegenüber einem herkömmlichen Zahnrad einen verbesserten Wirkungsgrad bei der Leistungsübertragung auf. Im Speziellen weist das Zahnrad auf der Rückseite einen höheren Reibwert auf. Ausserdem kann mit dem Zahnrad vorteilhafterweise ein höheres Drehmoment übertragen werden.

In Ausgestaltung der Erfindung ist das Zahnrad als Kegelrad und/oder Tellerrad ausgebildet. Im Speziellen kann das Zahnrad als oktoiden- oder evolventenverzahntes Kegelrad und/oder Tellerrad ausgebildet sein. Ein derartiges Zahnrad weist in der erfindungsgemäßen Ausgestaltung einen besonders hohen Wirkungsgrad auf.

In Ausgestaltung der Erfindung weist die Mikrostruktur, wenigstens abschnittsweise, eine Tiefe (t) von weniger oder kleiner oder gleich 100 µm, bevorzugt 50 µm, besonders bevorzugt 20 µm, im Speziellen 10 µm auf, bevorzugt in Bezug zur Oberfläche der Rückseite und/oder der Oberfläche der Beschichtung der Rückseite, insbesondere ohne Mikrostruktur. Die Mikrostruktur weist, wenigstens abschnittsweise, eine Tiefe (t) von mindestens größer oder gleich 0,1 µm, bevorzugt 1 µm, besonders bevorzugt 5 µm auf, bevorzugt in Bezug zur Oberfläche der Rückseite und/oder der Oberfläche der Beschichtung der Rückseite, insbesondere ohne Mikrostruktur. Ausserdem kann die Mikrostruktur alternativ oder zusätzlich, wenigstens abschnittsweise, eine Höhe (h) von weniger oder kleiner oder gleich 100 µm, bevorzugt 50 µm, besonders bevorzugt 20 µm, im Speziellen 10 µm aufweisen, bevorzugt in Bezug zur Oberfläche der Rückseite und/oder der Oberfläche der Beschichtung der Rückseite, insbesondere ohne Mikrostruktur. Die Mikrostruktur kann, wenigstens abschnittsweise, eine Höhe (t) von mindestens größer oder gleich 0,1 µm, bevorzugt 1 µm, besonders bevorzugt 5 µm aufweisen, bevorzugt in Bezug zur Oberfläche der Rückseite und/oder der Oberfläche der Beschichtung der Rückseite, insbesondere ohne Mikrostruktur. Im Speziellen kann die Mikrostruktur oder können eine Vielzahl der Mikrostrukturen und besonders bevorzugt alle Mikrostrukturen, die genannte Tiefe und/oder Höhe aufweisen. Insbesondere durch die Wahl der Tiefe und/oder Höhe der Mikrostruktur aus dem vorgenannten Bereich ist ein besonders gutes Wirkungsgradverhalten des Zahnrads bei der Leistungsübertragung erreichbar.

In Ausgestaltung der Erfindung weist die Rückseite des Zahnrads eine oder mehrere Ausnehmungen, insbesondere eine oder mehrere Bohrungen, auf. Die Ausnehmung oder Ausnehmungen, insbesondere eine oder mehrere Bohrungen, können Schraubengewinde aufweisen. Die Ausnehmungen, insbesondere die Bohrungen, können symmetrisch auf der Rückseite verteilt sein, bevorzugt radial. Die Ausnehmungen, insbesondere die Bohrungen, können den gleichen Radius oder Abstand zu einer Rotationsachse des Zahnrads aufweisen. Im Speziellen kann das Zahnrad mindestens 2, bevorzugt grösser oder gleich 5, besonders bevorzugt grösser oder gleich 10 Ausnehmungen, insbesondere Bohrungen, umfassen.

In Ausgestaltung der Erfindung ist jeweils eine Mikrostruktur in einem Radius von kleiner oder gleich 50 mm, bevorzugt 30 mm, besonders bevorzugt 20 mm, um die jeweilige Ausnehmung, insbesondere Bohrung, angeordnet. Der Radius kann dabei auf eine Mittellinie oder Mittelsenkrechten der jeweiligen Ausnehmung oder Bohrung, insbesondere deren Öffnungen, bezogen sein. Vorzugsweise kann die jeweilige Mikrostruktur als eine Vertiefung und/oder Erhöhung zu verstehen sein, welche sich, insbesondere radial, um die Ausnehmung oder Bohrung auf der Rückseite des Zahnrads erstreckt. Beispielsweise kann durch den Einsatz eines Laserstrahls die Oberfläche gezielt aufgeschmolzen werden, sodass eine reproduzierbare angeordnete Mikrogeometrie entsteht. Die Mikrogeometrie weist ein erhabenes, quer zur Umfangskraft angeordnetes Muster auf, welches sich innerhalb oder in unmittelbarer Nähe des Schrauben-Verformungskegels befindet.

Die Erfindung betrifft weiter eine Vorrichtung. Die Vorrichtung umfasst ein Zahnrad, insbesondere nach einem der Ansprüche 1 bis 6, und ein Bauteil.

In Ausgestaltung der Erfindung weist das Bauteil eine oder mehrere weitere Ausnehmungen, insbesondere eine oder mehrere weitere Bohrungen auf. Die Ausnehmungen und die weiteren Ausnehmungen, insbesondere eine oder mehrere weitere Bohrungen, können fluchtend und/oder koaxial und/oder achsparallel und/oder überlappend angeordnet sein, insbesondere wenn das Bauteil und das Zahnrad miteinander verbunden werden oder verbunden sind. Im Speziellen kann die Mittellinie oder Mittelsenkrechten der jeweiligen Ausnehmung oder Bohrung, insbesondere deren Öffnungen, koaxial oder achsparallel sein.

In Ausgestaltung der Erfindung sind das Zahnrad und das Bauteil miteinander verbindbar oder verbunden, insbesondere drehfest miteinander verbindbar oder verbunden. Das Zahnrad und das Bauteil können mit in den Ausnehmungen und weiteren Ausnehmungen angeordneten Befestigungsmitteln, insbesondere zusammenwirkend, miteinander verbindbar oder verbunden sein, insbesondere drehfest miteinander verbindbar oder verbunden und/oder gegeneinander gesichert sein.

Die Befestigungsmittel können beispielsweise Schrauben sein. Die Befestigungsmittel können in den Ausnehmungen, insbesondere Bohrungen, angeordnet sein. Im Speziellen können die Befestigungsmittel können durch die Ausnehmungen, insbesondere Bohrungen, gesteckt sein. Die Befestigungsmittel können durch die Schraubengewinde in den Ausnehmungen gesichert werden.

Mit dem Einleiten der Vorspannkraft durch den Anzug der Befestigungsmittel entsteht in dem Bereich der Mikrostruktur zwischen dem Zahnrad und dem Bauteil, insbesondere einem Differentialgehäuse, ein Mikroformschluss. Dieser Formschluss kann als optimierter oder gesteigerter Reibwert angesehen werden. Hierdurch kann beispielsweise auf ein Entfernen der Beschichtung auf der Rückseite des Zahnrads, insbesondere des Kegelrads oder Tellerrads, verzichtet werden. Weiter besteht die Möglichkeit, durch den höheren Reibwert die Größe und/oder die Anzahl der Befestigungsmittel bei gegebenem Drehmoment zu reduzieren oder in einem vorhandenen Design bei gleicher Anzahl an Befestigungsmitteln ein höheres Drehmoment übertragen zu können.

In Ausgestaltung der Erfindung umfasst die Vorrichtung einen Flansch, und das Bauteil ist zwischen dem Flansch und dem Zahnrad angeordnet. Der Flansch kann eine oder mehrere weitere Ausnehmungen, insbesondere eine oder mehrere weitere Bohrungen aufweisen. Die Ausnehmungen und die weiteren Ausnehmungen des Bauteils und die weiteren Ausnehmungen des Flanschs können fluchtend und/oder koaxial und/oder achsparallel und/oder überlappend angeordnet sein, insbesondere wenn das Bauteil und das Zahnrad und der Flansch miteinander verbunden werden oder verbunden sein.

In Ausgestaltung der Erfindung sind das Zahnrad und das Bauteil und der Flansch mit den in den Ausnehmungen und weiteren Ausnehmungen angeordneten Befestigungsmitteln zusammenwirkend miteinander verbindbar oder verbunden, insbesondere drehfest miteinander verbindbar oder verbunden und/oder gegeneinander gesichert.

In Ausgestaltung der Erfindung ist das Bauteil ein Differentialgehäuse.

Die Erfindung betrifft weiter eine Arbeitsmaschine mit einer Vorrichtung, insbesondere einer Vorrichtung nach einem der Ansprüche 7 bis 14. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile auf.

Die Arbeitsmaschine kann mit einer Drehzahl und/oder Kraft und/oder einem Drehmoment eines Motors antreibbar sein. Die Arbeitsmaschine kann das oder die Bodeneingriffsmittel umfassen. Die Bodeneingriffsmittel können die Arbeitsmaschine auf dem Boden abstützen und/oder tragen. Die Bodeneingriffsmittel können Räder oder Raupen oder Ketten sein. Die Bodeneingriffsmittel können insbesondere Vorderräder und Hinterräder sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine, und
- Fig. 2: eine schematische Darstellung des ersten Ausführungsbeispiels des erfindungsgemässen Zahnrads, und
- Fig. 3: eine schematische Darstellung der Rückseite des erfindungsgemässen Zahnrads aus Figur 2, und
- Fig. 4: eine schematische Darstellung eines ersten Ausführungsbeispiels der erfindungsgemässen Vorrichtung.

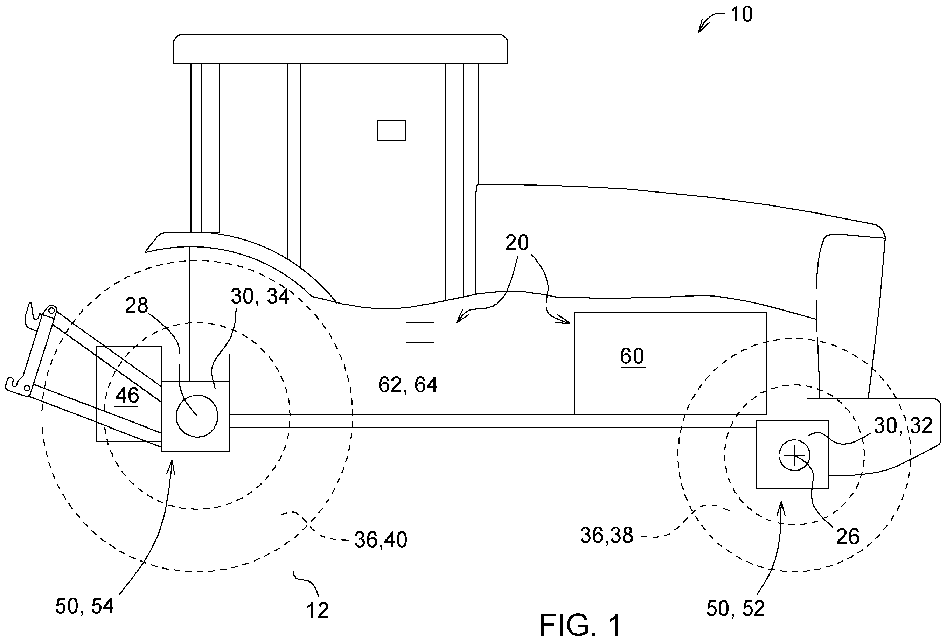

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, insbesondere mit einer erfindungsgemässen Vorrichtung 30. Die Arbeitsmaschine 10 umfasst eine Antriebsvorrichtung 20. Ausserdem ist die Arbeitsmaschine 10 mit der Antriebsvorrichtung 20 antreibbar.

Die Arbeitsmaschine 10, insbesondere die Antriebsvorrichtung 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10, insbesondere die Antriebsvorrichtung 20, kann einen Fahrantrieb 50, insbesondere einen Vorderachsantrieb 52 und einen Hinterachsantrieb 54 umfassen. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Alternativ können die Bodeneingriffsmittel 36 auch als Raupen oder Ketten ausgebildet und angeordnet sein.

Der Fahrantrieb 50 kann die erste Fahrzeugachse 26 und/oder die zweite Fahrzeugachse 28 und/oder eine erfindungsgemässe Vorrichtung 30 und/oder ein erstes Differenzialgetriebe 32 und/oder ein zweites Differenzialgetriebe 34 und/oder das oder die Bodeneingriffsmittel 36 umfassen. Die erste Fahrzeugachse 26 kann mit dem ersten Differenzialgetriebe 30 verbunden sein. Die zweite Fahrzeugachse 28 kann mit dem zweiten Differenzialgetriebe 32 verbunden sein.

Die Arbeitsmaschine 10, insbesondere die Antriebsvorrichtung 20, umfasst einen Motor 50 und einen Antriebsstrang 52, insbesondere ein Getriebe 54. Mit der Antriebsvorrichtung 20, insbesondere dem Motor 50, kann eine Drehbewegung und/oder Kraft und/oder ein Drehmoment und/oder eine Drehzahl erzeugbar und, insbesondere über den Antriebsstrang 52, insbesondere das Getriebe 54, und die Vorrichtung 30 auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder Drehmoment und/oder Drehzahl eines oder mehrerer Bodeneingriffsmittel 36 und somit in einen Schub der Arbeitsmaschine 10 um.

Die Arbeitsmaschine 10, insbesondere die Antriebsvorrichtung 20, kann einen ersten Leistungsausgang 46 umfassen. Der erste Leistungsausgang kann eine Zapfwelleneinheit 222 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist.

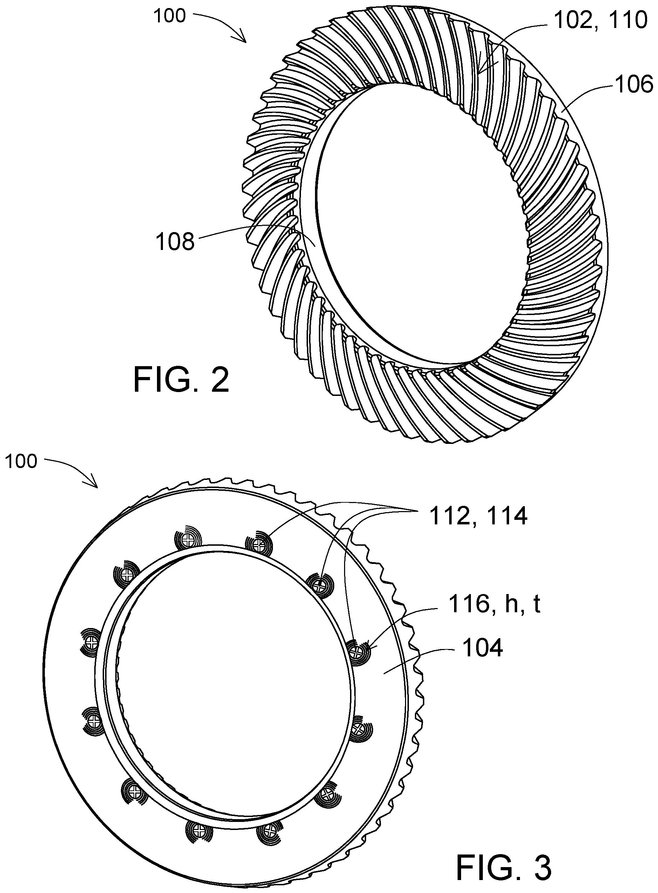

Figur 2 zeigt eine schematische Darstellung eines ersten Ausführungsbeispiels des erfindungsgemässen Zahnrads 100. Die in Figur 1 dargestellte Arbeitsmaschine 10 kann das in Figur 2 dargestellte Zahnrad 100 umfassen.

Das Zahnrad 100 umfasst eine Zahnradseite 102 und einer der Zahnradseite 102 gegenüberliegenden und/oder abgewandten Rückseite 104. Das Zahnrad 100 umfasst ausserdem eine umlaufende Umfangsseite 106. Ebenso kann das Zahnrad 100 eine umlaufende innere Umfangsseite 108 aufweisen. Die Rückseite 104 des Zahnrads 100 weist eine Mikrostruktur 116 (siehe Figur 3) auf.

An oder auf der Zahnradseite 102 sind Zähne 110 angeordnet. Die Zähne 110 sind zur Leistungsübertragung von oder zu einem weiteren Zahnrad, beispielsweise einem Ritzel, ausgebildet. Das Zahnrad 100 ist vorliegend als Kegelrad oder Tellerrad ausgebildet, insbesondere als oktoiden- oder evolventenverzahntes Kegelrad und/oder Tellerrad ausgebildet.

Figur 3 zeigt eine schematische Darstellung der Rückseite 104 des erfindungsgemässen Zahnrads 100 aus Figur 2. Die in Figur 1 dargestellte Arbeitsmaschine 10 kann das in Figur 3 dargestellte Zahnrad 100 umfassen.

Das Zahnrad 100, insbesondere die Rückseite 104, weist mehrere Ausnehmungen 112, insbesondere Bohrungen 114, auf. Vorliegend insbesondere 12 Ausnehmungen 112, insbesondere Bohrungen 114. Es sind nicht alle Ausnehmungen 112, insbesondere Bohrungen 114, mit Bezugszeichen versehen.

Darüber hinaus sind in einem Bereich um jede Ausnehmung 112, insbesondere Bohrung 114, Mikrostrukturen 116 angeordnet. Die Mikrostruktur 116 erstreckt sich im Wesentlichen um die Ausnehmungen 112. Der Übersichtlichkeit ist die Mikrostruktur 116 schematisch dargestellt. Die Vertiefung und/oder Erhöhung der Mikrostruktur 116 kann sich radial um die jeweilige Ausnehmung 112 erstecken. Die Mikrostruktur 116 kann in einem Radius von kleiner oder gleich 50 mm, bevorzugt 30 mm, besonders bevorzugt 20 mm, um die jeweilige Ausnehmung 112 angeordnet sein. Es sind nicht alle Mikrostrukturen 116 mit Bezugszeichen versehen.

Ausserdem kann die Mikrostruktur 116, wenigstens abschnittsweise, eine Tiefe t von kleiner oder gleich 100 µm, bevorzugt 50 µm, besonders bevorzugt 20 µm, im Speziellen 10 µm aufweisen, und/oder die Mikrostruktur 116, wenigstens abschnittsweise, eine Tiefe t von mindestens größer oder gleich 0,1 µm, bevorzugt 1 µm, besonders bevorzugt 5 µm aufweisen. Ebenso kann die Mikrostruktur 116, wenigstens abschnittsweise, eine Höhe h von weniger oder gleich 100 µm, bevorzugt 50 µm, besonders bevorzugt 20 µm, im Speziellen 10 µm aufweisen, und/oder die Mikrostruktur, wenigstens abschnittsweise, eine Höhe h von mindestens größer oder gleich 0,1 µm, bevorzugt 1 µm, besonders bevorzugt 5 µm aufweisen. Die Tiefe und/oder Höhe der Mikrostruktur 116 ist dabei, im Verhältnis zur übrigen Geometrie der Rückseite, schematisch dargestellt, was der besseren Darstellbarkeit dient.

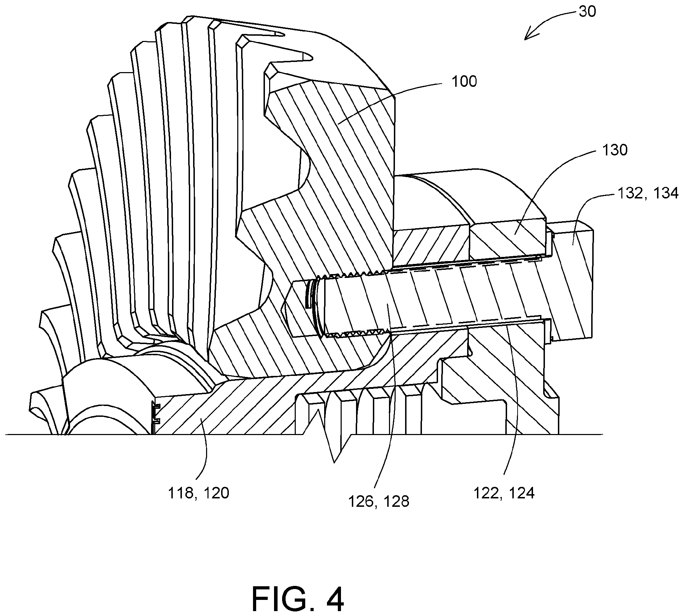

Figur 4 zeigt eine schematische Darstellung eines ersten Ausführungsbeispiels der erfindungsgemässen Vorrichtung 30. Die in Figur 4 gezeigte Vorrichtung 30 entspricht im Wesentlichen der in den Figuren 1 gezeigten Vorrichtung 30, sodass im Folgenden lediglich auf Details und/oder Unterschiede eingegangen wird. Die in Figur 4 gezeigte Vorrichtung 30 kann das in den Figuren 2 und 3 gezeigte Zahnrad 100 umfassen, sodass im Folgenden lediglich auf Details und/oder Unterschiede eingegangen wird. Die in Figur 1 dargestellte Arbeitsmaschine 10 kann die in Figur 4 dargestellte Vorrichtung 30 umfassen.

Die Vorrichtung umfasst das Zahnrad 100 und ein Bauteil 118. Das Bauteil 118 kann ein Differentialgehäuse 120 sein. Das Bauteil 118, insbesondere das Differentialgehäuse 120, kann eine oder mehrere weitere Ausnehmungen 122, insbesondere eine oder mehrere weitere Bohrungen 124 aufweisen.

Die Ausnehmungen 112, insbesondere die Bohrungen 114, und die weiteren Ausnehmungen 122, insbesondere die weiteren Bohrungen 124, können fluchtend und/oder koaxial und/oder achsparallel und/oder überlappend angeordnet sind, insbesondere, wenn das Bauteil 118 und das Zahnrad 100 miteinander verbunden sind.

Das Zahnrad 100 und das Bauteil 118 sind miteinander verbunden, insbesondere drehfest miteinander verbunden. Das Zahnrad 100 und das Bauteil 118 sind mit einem in der Ausnehmung 112, insbesondere der Bohrungen 114, und der weiteren Ausnehmung 122, insbesondere der weiteren Bohrung 124, angeordneten Befestigungsmittel 126, vorliegend eine Schraube 128, zusammenwirkend miteinander verbunden, insbesondere drehfest miteinander verbunden und/oder gegeneinander gesichert.

Ausserdem kann die Vorrichtung 30 einen Flansch 130 umfassen. Das Bauteil 118 ist zwischen dem Flansch 130 und dem Zahnrad 100 angeordnet. Der Flansch 130 weist eine oder mehrere weitere Ausnehmungen 132, insbesondere eine oder mehrere weitere Bohrungen 134 auf.

Die Ausnehmungen 112, insbesondere die Bohrungen 114, und die weiteren Ausnehmung 122, insbesondere weitere Bohrungen 124, des Bauteils 118 und die weiteren Ausnehmungen 132, insbesondere der weitere Bohrungen 134, des Flanschs 130 sind fluchtend und/oder koaxial und/oder achsparallel und/oder überlappend angeordnet, insbesondere, wenn das Bauteil 118 und das Zahnrad 100 und der Flansch 130 miteinander verbunden sind.

Das Zahnrad 100 und das Bauteil 118 und der Flansch 130 sind mit dem in der Ausnehmung 112, insbesondere Bohrung 114, und in den weiteren Ausnehmungen 122, 132, insbesondere den weiteren Bohrungen 124, 134, angeordneten Befestigungsmittel 126, vorliegend die Schraube 128, zusammenwirkend miteinander verbunden sind, insbesondere drehfest miteinander verbunden und/oder gegeneinander gesichert.

## Patentansprüche

1. Zahnrad mit einer Zahnradseite (102) und einer der Zahnradseite (102) gegenüberliegenden Rückseite (104), **dadurch gekennzeichnet, dass** die Rückseite (104) eine Mikrostruktur (116) aufweist.

2. Zahnrad nach Anspruch 1, **dadurch gekennzeichnet, dass** das Zahnrad (100) als Kegelrad und/oder Tellerrad ausgebildet ist.

3. Zahnrad nach einem der vorhergehenden Ansprüche, **dadurch gekennzeichnet, dass** die Mikrostruktur (116), wenigstens abschnittsweise, eine Tiefe (t) von kleiner oder gleich 100 µm, bevorzugt 50 µm, besonders bevorzugt 20 µm, im Speziellen 10 µm aufweist, und/oder die Mikrostruktur (116), wenigstens abschnittsweise, eine Tiefe (t) von mindestens größer oder gleich 0,1 µm, bevorzugt 1 µm, besonders bevorzugt 5 µm aufweist.

4. Zahnrad nach einem der vorhergehenden Ansprüche, **dadurch gekennzeichnet, dass** die Mikrostruktur (116), wenigstens abschnittsweise, eine Höhe (h) von weniger oder gleich 100 µm, bevorzugt 50 µm, besonders bevorzugt 20 µm, im Speziellen 10 µm aufweist, und/oder die Mikrostruktur (116), wenigstens abschnittsweise, eine Höhe (h) von mindestens größer oder gleich 0,1 µm, bevorzugt 1 µm, besonders bevorzugt 5 µm aufweist.

5. Zahnrad nach einem der vorhergehenden Ansprüche, **dadurch gekennzeichnet, dass** die Rückseite (104) eine oder mehrere Ausnehmungen (112), insbesondere Bohrungen (114), aufweist.

6. Zahnrad nach einem der vorhergehenden Ansprüche, **dadurch gekennzeichnet, dass** jeweils eine Mikrostruktur (116) in einem Radius von kleiner oder gleich 50 mm, bevorzugt 30 mm, besonders bevorzugt 20 mm, um die jeweilige Ausnehmung (112) angeordnet ist.

7. Vorrichtung umfassen ein Zahnrad (100) nach einem der Ansprüche 1 bis 6 und einem Bauteil (118).

8. Vorrichtung nach Anspruch 7, **dadurch gekennzeichnet, dass** das Bauteil (118) eine oder mehrere weitere Ausnehmungen (122), insbesondere eine oder mehrere weitere Bohrungen (124) aufweist.

9. Vorrichtung nach Anspruch 8, **dadurch gekennzeichnet, dass** die Ausnehmungen (112) und die weiteren Ausnehmungen (122) fluchtend und/oder koaxial und/oder achsparallel und/oder überlappend angeordnet sind, insbesondere, wenn das Bauteil (118) und das Zahnrad (100) miteinander verbunden sind.

10. Vorrichtung nach Anspruch 9, **dadurch gekennzeichnet, dass** das Zahnrad (100) und das Bauteil (118) miteinander verbindbar oder verbunden sind, insbesondere drehfest miteinander verbindbar oder verbunden sind, und/oder das Zahnrad (100) und das Bauteil (118) mit in den Ausnehmungen (112) und weiteren Ausnehmungen (122) angeordneten Befestigungsmitteln (126) zusammenwirkend miteinander verbindbar oder verbunden sind.

11. Vorrichtung nach einem der Ansprüche 7 bis 10, **dadurch gekennzeichnet, dass** die Vorrichtung (30) einen Flansch (130) umfasst, und das Bauteil (118) zwischen dem Flansch (130) und dem Zahnrad (100) angeordnet ist, und/oder der Flansch (130) eine oder mehrere weitere Ausnehmungen (132), insbesondere eine oder mehrere weitere Bohrungen (134) aufweist.

12. Vorrichtung nach Anspruch 12, **dadurch gekennzeichnet, dass** die Ausnehmungen (112) und die weiteren Ausnehmungen (122) des Bauteils (118) und die weiteren Ausnehmungen (132) des Flanschs (130) fluchtend und/oder koaxial und/oder achsparallel und/oder überlappend angeordnet sind, insbesondere, wenn das Bauteil (118) und das Zahnrad und der Flansch (130) miteinander verbunden sind.

13. Vorrichtung nach Anspruch 11 oder 12, **dadurch gekennzeichnet, dass** das Zahnrad (100) und das Bauteil (118) und der Flansch (130) mit den in den Ausnehmungen (112) und weiteren Ausnehmungen (122, 132) angeordneten Befestigungsmitteln (126) zusammenwirkend miteinander verbindbar oder verbunden sind, insbesondere drehfest miteinander verbindbar oder verbunden und/oder gegeneinander gesichert.

14. Vorrichtung nach einem der Ansprüche 7 bis 13, **dadurch gekennzeichnet, dass** das Bauteil (118) ein Differentialgehäuse (120) ist.

15. Arbeitsmaschine mit einer Vorrichtung nach Anspruch 7 bis 14.
